# EUROPEAN PATENT APPLICATION

(11) **EP 4 790 485 A1**
(43) Date of publication of application: **12.08.2026**
(21) Application number: 24880999.8
(22) Date of filing: 20.05.2024
(51) Int. Cl.: G03B 21/20

(54) **LIGHT SOURCE, OPTICAL DEVICE, AND RELATED APPARATUS AND METHOD**

(30) Priority: 24.10.2023 CN 202311389750
(71) Applicant: HUAWEI TECHNOLOGIES CO., LTD., Shenzhen 518129 (CN)
(72) Inventor: YANG, Fan, Shenzhen, Guangdong 518129 (CN); SHI, Guangyuan, Shenzhen, Guangdong 518129 (CN)
(74) Representative: Pfenning, Meinig & Partner mbB
(86) International application number: PCT/CN2024/094136
(87) International publication number: WO 2025/086620

(57) **Abstract**

A light source, an optical device, a related device, and a method are provided. The light source is configured to emit a laser-fluorescence combined beam. The optical device may be applied to the light source. The optical device can emit a fluorescent beam under excitation of a first laser beam in the light source, and can also suppress a speckle of a second laser beam in the light source. This helps the light source emit the laser-fluorescence combined beam that suppresses the speckle, and also helps reduce a quantity of devices in the light source and reduce a volume of the projection light source, thereby meeting a market requirement for miniaturization of a projector.

## Description

This application claims priority to Chinese Patent Application No. 202311389750.8, filed with the China National Intellectual Property Administration on October 24, 2023 and entitled "LIGHT SOURCE, OPTICAL DEVICE, RELATED DEVICE, AND METHOD", which is incorporated herein by reference in its entirety.

### TECHNICAL FIELD

This application relates to the field of optical technologies, and in particular, to a light source, an optical device, a related device, and a method.

### BACKGROUND

Laser projection display technology can most authentically reproduce rich and vibrant colors of the objective world, delivering stunning effects. A light source is a core component of a projector, and is configured to emit a laser-fluorescence combined beam. However, due to high coherence of a laser beam, when laser light emitted by the light source is projected to a screen, interference between light beams can cause irregularly distributed bright and dark spots in a projected image, that is, laser speckles. The speckles severely affect imaging quality of the projected image, to be specific, reduce image resolution and contrast, and thus become a major obstacle to the development of laser projection display.

To reduce impact of speckle noise, a speckle-reduction device needs to be introduced into the light source. This increases a quantity of devices in the light source and increases a volume of the light source, which cannot meet a market requirement for miniaturization of the projector.

### SUMMARY

Embodiments of this application provide a light source, an optical device, a related device, and a method, to reduce a quantity of devices in a projection light source, reduce a volume of the projection light source, and meet a market requirement for miniaturization of a projector.

According to a first aspect, this application provides an optical device. The optical device is applied to a light source. The light source includes a laser, which is configured to emit a laser beam. The optical device includes an optical mechanism and a driving mechanism. The driving mechanism is configured to drive the optical mechanism to move. The optical mechanism includes a first region and a second region. The first region is configured to receive a first laser beam in the light source and emit a fluorescent beam under excitation of the first laser beam. The second region is configured to receive a second laser beam in the light source and reduce coherence of the second laser beam.

The optical device can emit the fluorescent beam under excitation of the first laser beam in the light source, and can also suppress a speckle of the second laser beam in the light source. The fluorescent beam and the second laser beam may be combined and then emitted from the light source. This helps the light source emit a laser-fluorescence combined beam that suppresses the speckle, and also helps reduce a quantity of devices in the light source and reduce a volume of the projection light source, thereby meeting a market requirement for miniaturization of a projector.

The first region and the second region are used to receive different laser beams in the light source. An incident position of the first laser beam on the optical mechanism and an incident position of the second laser beam on the optical mechanism may be different positions in space. This helps the first region receive the first laser beam and helps the second region receive the second laser beam. In this way, the optical mechanism simultaneously outputs the fluorescent beam and the second laser beam that suppress the speckle, helping the light source emit the laser-fluorescence combined beam with a stable wavelength. This optimizes display quality of a projected image.

In a movement process of the optical mechanism, the first laser beam may be incident at different positions in the first region. Correspondingly, a plurality of positions in the first region are used to receive the first laser beam in a time division manner and emit a fluorescent beam under excitation of the first laser beam. This helps avoid excessive heat production and low fluorescence emission efficiency caused by continuous receiving of the laser beam at a local position. To reduce a size of the first region, the first region may be a union of a plurality of incident positions of the first laser beam on the optical mechanism.

In the movement process of the optical mechanism, the second laser beam may be incident at different positions in the second region. Correspondingly, a plurality of positions in the second region are used to receive the second laser beam in a time-division manner and reduce coherence of the second laser beam. Because different positions have different impact on a phase of the laser beam, this arrangement helps increase spatial phase randomness of the second laser beam and enhance effect of reducing coherence of the second laser beam. To reduce a size of the second region, optionally, the second region may be a union of a plurality of incident positions of the second laser beam on the optical mechanism.

The first laser beam and the second laser beam may be two laser beams obtained by splitting laser light emitted by a same laser in the light source, or may come from different lasers in the light source.

A track in which the driving mechanism drives the optical mechanism to move is not limited in this application. For example, the driving mechanism may drive the optical mechanism to pivot, and the first region and the second region may be rectangular regions. Alternatively, optionally, the driving mechanism is configured to drive the optical mechanism to rotate around an axis, and the first region and the second region are annular bodies that use the axis as a central axis. In this way, provided that incident positions of the first laser beam and the second laser beam on the optical mechanism are respectively located in the first region and the second region when the optical mechanism is stationary, it can be ensured that incident positions of the first laser beam and the second laser beam on the optical mechanism are still respectively located in the first region and the second region when the optical mechanism rotates. This facilitates a design of an optical path. Optionally, the first region surrounds the second region. In other words, an inner diameter of the annular body corresponding to the first region is greater than or equal to an outer diameter of the annular body corresponding to the second region. Alternatively, the second region surrounds the first region, that is, an inner diameter of the annular body corresponding to the second region is greater than or equal to an outer diameter of the annular body corresponding to the first region.

Optionally, the first region includes a phosphor layer, and the phosphor layer is configured to generate the fluorescent beam under excitation of the first laser beam. The first region may further include another structure, for example, may further include a reflective layer, configured to reflect a fluorescent beam, thereby helping improve luminance of the fluorescent beam.

Optionally, the second region includes a diffusion layer, and the diffusion layer is configured to diffuse the second laser beam. The diffusion layer may be made of a diffuser (diffuser) or a diffusion sheet. A surface of the diffusion layer may be coated with a diffuser, processed with a microstructure, or processed through sandblasting.

Optionally, the optical mechanism further includes a substrate. The substrate may be configured to arrange the first region and the second region, and the substrate is mounted together with the driving mechanism. The driving mechanism drives the substrate to move, so as to drive the first region and the second region to move. Optionally, the substrate has an opening or a hollow-out portion corresponding to the first region, to embed the first region. Optionally, the substrate has an opening or a hollow-out portion corresponding to the second region, to embed the second region.

Optionally, the phosphor layer may be used as the substrate, with a portion of the phosphor layer used as the first region, a portion used to arrange the second region, and a portion used to mount the driving mechanism. Alternatively, optionally, the diffusion layer may be used as the substrate, with a portion of the diffusion layer used as the second region, a portion used to arrange the first region, and a portion used to mount the driving mechanism. This helps simplify a structure of the optical device.

According to a second aspect, this application provides a light source. The light source includes a first laser, an optical splitting device, an optical device, and a first optical combining device. The first laser is configured to emit laser light. The optical splitting device is disposed in an optical path of the laser light, and is configured to split the laser light into a first laser beam and a second laser beam. The optical device may be the optical device described in any one of the first aspect or the possible implementations of the first aspect. For example, the optical device includes an optical mechanism and a driving mechanism. The driving mechanism is configured to drive the optical mechanism to move. A first region of the optical mechanism is configured to receive the first laser beam and emit a fluorescent beam under excitation of the first laser beam. A second region of the optical mechanism is configured to receive the second laser beam and reduce coherence of the second laser beam. The first optical combining device is configured to receive the fluorescent beam and the second laser beam that emerges from the second region, and may combine the fluorescent beam and the second laser beam that emerges from the second region, so that the light source outputs a laser-fluorescence combined beam that suppresses a speckle.

By disposing the foregoing optical device in the light source, not only the fluorescent beam can be emitted to the first optical combining device, but also the second laser beam that helps suppress the speckle can emerge to the first optical combining device. This helps reduce a quantity of devices in the light source, and reduce a volume of a projection light source, thereby meeting a market requirement for miniaturization of a projector.

In addition, the first region and the second region are used to receive different laser beams in the light source. An incident position of the first laser beam on the optical mechanism and an incident position of the second laser beam on the optical mechanism may be different positions in space. This helps the first region receive the first laser beam and helps the second region receive the second laser beam. In this way, the optical mechanism simultaneously outputs the fluorescent beam and the second laser beam that suppress the speckle, helping the light source emit the laser-fluorescence combined beam with a stable wavelength. This optimizes display quality of a projected image.

Optionally, the light source may further include one or more deflection devices, where the one or more deflection devices are configured to change a propagation direction of a target laser beam. The target laser beam may be the first laser beam or the second laser beam. This enables the first laser beam and the second laser beam to be incident to the optical mechanism along different optical paths.

Optionally, one or more deflection devices (referred to as first deflection devices) may be disposed in an optical path of the first laser beam, and one or more deflection devices (referred to as second deflection devices) may also be disposed in an optical path of the second laser beam. The first deflection device may be located in the transmission optical path of the first laser beam. The first deflection device is configured to change a propagation direction of the first laser beam, so that the first laser beam is incident to the first optical device from a first direction. The second deflection device is located in the transmission optical path of the second laser beam. The second deflection device is configured to change a propagation direction of the second laser beam, so that the second laser beam is incident to the first optical device from a second direction.

To further improve a color gamut of an output light beam, optionally, the light source further includes a second laser, and the second laser is configured to emit a third laser beam. The optical mechanism is further located in an optical path of the third laser beam. In a movement process of the optical mechanism, the third laser beam may be incident at different positions of the optical mechanism. A region that is in the optical mechanism and that is used to receive the third laser beam is referred to as a third region, and the third region is used to reduce coherence of the third laser beam. A size of the third region is greater than a spot size of the third laser beam. Different positions of the third region are used to receive the third laser beam in a time-division manner. Alternatively, the third region may be understood as a union of incident positions of the third laser beam on the optical mechanism.

The first optical combining device is configured to combine the fluorescent beam, the second laser beam that emerges from the second region, and the third laser beam that emerges from the third region.

Optionally, the second region and the third region are a same area on the optical mechanism. This helps reduce a size of the optical mechanism.

Optionally, the second laser beam and the third laser beam are incident to the second region after being combined by an optical combining device (referred to as a second optical combining device). The second optical combining device is located in an optical path of the second laser beam and the third laser beam and before the second region, and is configured to combine the second laser beam and the third laser beam.

The second laser beam and the third laser beam may be incident to the second optical combining device from different directions. The second optical combining device is configured to combine the second laser beam and the third laser beam that are incident from different directions, and then guide the combined laser beams to the second region. This helps simplify a design of the light source. Optionally, the second optical combining device is configured to transmit the second laser beam, and reflect the third laser beam. Alternatively, the second optical combining device is configured to transmit the third laser beam, and reflect the second laser beam.

Optionally, the second optical combining device is the optical splitting device, that is, the optical splitting device may be reused to combine the second laser beam and the third laser beam. This helps reduce a quantity of devices in the light source, and reduce a volume of the entire device, adapting to a trend towards device miniaturization, and reducing costs.

Optionally, one of the one or more deflection devices may be reused to combine the second laser beam and the third laser beam. This helps reduce a quantity of devices in the light source, and reduce a volume of the entire device, adapting to the trend towards device miniaturization, and reducing costs. Optionally, the deflection device may include a dichroic sheet.

To ensure that the second laser beam is incident to the second region, a size of the second region generally needs to be set to be far greater than a spot area of the second laser beam. Optionally, the light source further includes a first beam shaping device. The first beam shaping device is located in the optical path of the second laser beam and before the second region, and is configured to converge the second laser beam. This helps reduce a spot size of the second laser beam in the second region and reduce an area of the second region, thereby reducing a surface area of the optical mechanism and further reducing a volume of the light source.

The first beam shaping device is configured to converge a light beam. The second laser beam that emerges from the first beam shaping device may be a collimated light beam or a converged light beam. Correspondingly, the first beam shaping device may be a collimating lens or a converging lens. For example, the first beam shaping device is a converging lens. A spot of the second laser beam in the second region may be located at a focal point of the converging lens.

Similarly, optionally, in the light source, a beam shaping device may be further disposed in the optical path of the third laser beam and before the second region, to reduce the spot size of the third laser beam. This helps reduce the area of the second region, thereby reducing the surface area of the optical mechanism and further reducing the volume of the light source.

Similarly, optionally, in the light source, a beam shaping device may be further disposed in the optical path of the first laser beam and before the first region, to reduce a spot size of the first laser beam. This helps reduce an area of the first region, thereby reducing the surface area of the optical mechanism and further reducing the volume of the light source.

Optionally, to reduce the quantity of devices in the light source, different laser beams may reuse a same beam shaping device to reduce a size of a light spot incident on the optical mechanism.

The second region generally increases a divergence angle of the second laser beam while weakening coherence of the second laser beam. Optionally, the light source further includes a second beam shaping device. The second beam shaping device is located in the optical path of the second laser beam between the second region and the first optical combining device. The second beam shaping device is configured to collimate the second laser beam. The second laser beam that emerges from the second beam shaping device is not limited to a collimated light beam in this application, provided that a divergence angle of the emerging second laser beam is reduced relative to a divergence angle of the incident second laser beam. This helps reduce a size of a following-stage optical element (for example, the first optical combining device). The second beam shaping device may be a collimating lens or a converging lens.

Similarly, optionally, in the light source, a beam shaping device may be further disposed in the optical path of the third laser beam between the second region and the first optical combining device, to reduce a divergence angle of the third laser beam, thereby helping reduce a size of a following-stage optical element (for example, the first optical combining device). The second beam shaping device may be a collimating lens or a converging lens.

Optionally, to reduce the quantity of devices in the light source, different laser beams may reuse a same beam shaping device to reduce divergence angles of the second laser beam and the third laser beam.

According to a third aspect, an embodiment of this application provides a projection system. The projection system includes a projection optical core and the light source according to any one of the implementations of the first aspect. The light source is configured to emit a light beam. The projection optical core is configured to modulate the light beam based on an image source, to obtain an imaging light beam. Optionally, the projection system may further include a lens. The lens is configured to perform projection and imaging on the imaging light beam. The lens may be configured to form a virtual image or a real image. For descriptions of beneficial effects of this aspect, refer to the second aspect. Details are not described again.

According to a fourth aspect, an embodiment of this application provides a head-up display system, including an optical deflection module and the projection system according to the third aspect. The projection system is configured to transmit an imaging light beam to the optical deflection module. The optical deflection module is configured to transmit the amplified imaging light beam to a windshield, and the amplified imaging light beam forms a virtual image through the windshield.

According to a fifth aspect, an embodiment of this application provides an illumination device, including a fixing base and the projection system according to the third aspect, where the fixing base is configured to secure the projection system. The illumination device may be a vehicle light.

According to a sixth aspect, an embodiment of this application provides a vehicle, including a vehicle body, a windshield, and a processor. The vehicle body is configured to secure the windshield and the processor. The vehicle further includes the head-up display system according to the fourth aspect and/or the illumination device according to the fifth aspect. The processor is configured to send an image source to the head-up display system and/or the illumination device. For example, the processor is configured to transmit vehicle driving-related information to the head-up display system and/or the illumination device, and the head-up display system and/or the illumination device are configured to modulate the vehicle driving-related information to the projected light beam to obtain the imaging light beam.

According to a seventh aspect, an embodiment of this application provides smart glasses. The smart glasses include a frame, a lens, and the projection system according to the third aspect. The frame is configured to secure the lens and the projection system. The projection system is configured to transmit an imaging light beam to the lens. The lens is configured to perform projection and imaging on the imaging light beam.

According to an eighth aspect, this application provides a method. The method is applied to a light source. The light source includes a first laser, an optical splitting device, an optical device, and a first optical combining device. The optical device includes an optical mechanism and a driving mechanism. The driving mechanism is configured to drive the optical mechanism to move. The method includes: The first laser emits laser light. Then, the optical splitting device splits the laser light into a first laser beam and a second laser beam. Next, a first region of the optical mechanism receives the first laser beam and emits a fluorescent beam under excitation of the first laser beam, and a second region of the optical mechanism receives the second laser beam and reduces coherence of the second laser beam. Then, the first optical combining device receives the fluorescent beam and the second laser beam that emerges from the second region, and combines the two for output.

Optionally, the light source further includes a first beam shaping device. The first beam shaping device is located in an optical path of the second laser beam and before the second region. The method further includes: The first beam shaping device converges the second laser beam.

Optionally, the light source further includes a second beam shaping device. The second beam shaping device is located in the optical path of the second laser beam and after the second region. The method further includes: The second beam shaping device collimates the second laser beam.

Optionally, the light source further includes a second laser, and the method further includes: The second laser emits a third laser beam. Then, the second region receives the third laser beam, and reduces coherence of the third laser beam. Next, the first optical combining device receives the third laser beam that emerges from the second region, and combines the third laser beam, the fluorescent beam, and the second laser beam. In other words, the first optical combining device is configured to transmit the third laser beam, and the fluorescent beam, the second laser beam, and the third laser beam are combined by and emerge from the first optical combining device.

A structure and a function of the optical device may be understood by referring to related content in the first aspect or the second aspect. Details are not described herein again.

For descriptions of beneficial effects of the eighth aspect, refer to the first aspect. Details are not described again.

### BRIEF DESCRIPTION OF DRAWINGS

FIG. 1 schematically shows a projection system according to this application;
FIG. 2-1 schematically shows a HUD system according to this application;
FIG. 2-2 schematically shows a vehicle light according to this application;
FIG. 3 schematically shows a top view of an optical mechanism in an optical device according to this application;
FIG. 4 and FIG. 5 respectively schematically show sectional views of the optical mechanism shown in FIG. 3; and
FIG. 6 to FIG. 9 respectively show structures of an optical path of a light source according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

This application provides a light source. The light source may be applied to a projection system. The following first describes the projection system.

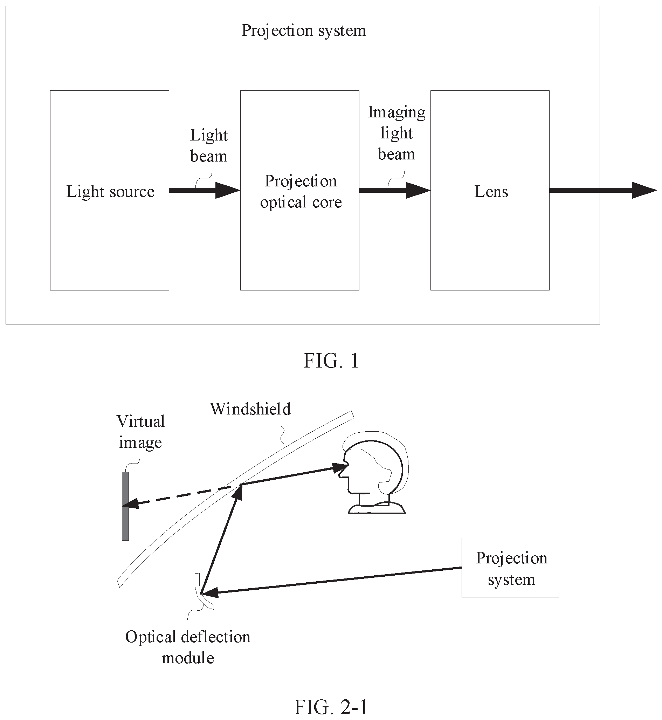

FIG. 1 schematically shows a possible structure of a projection system. As shown in FIG. 1, the projection system generally includes a light source, a projection optical core, and a lens. The light source is configured to emit a light beam to the projection optical core. The projection optical core is configured to modulate the light beam from the light source to obtain an imaging light beam. The lens is configured to perform projection and imaging on the imaging light beam.

A quantity of light valves in the projection optical core is not limited in this application. For example, the projection system may be a single-panel projection system, in which an RGB three-color image is synthesized by synchronizing a single light valve with an illumination time sequence of a light source or a rotation time sequence of a color wheel. For example, the projection system may be a three-panel projection system, in which three light valves are respectively used in three channels of red, green, and blue (red green blue, RGB) to synthesize an image.

A type of the light valve is not limited in this application. For example, the projection system may use a digital light processing (Digital Light Processing, DLP) technology, using a DMD digital micro-reflector as a light valve. For example, the projection system may use a liquid crystal display (liquid crystal display, LCD) technology, using an LCD as a light valve. The LCD is a transmission device. A projector utilizes photoelectric effect of liquid crystals, that is, an arrangement of liquid crystal molecules changes under an action of an electric field, affecting a polarization state of transmitted light of an LCD unit of the LCD, so as to perform image signal modulation. For example, the projection system may use a liquid crystal on silicon (Liquid Crystal On Silicon, LCOS) technology, using an LCOS as a light valve, that is, photoelectric effect of liquid crystals is also used to perform image modulation. However, different from the LCD, the LCOS is a reflective device. A drive panel is fabricated on a silicon chip by using a semiconductor process, to change a polarization state of reflected light of an LCOS unit, thereby implementing image signal modulation.

The lens includes one or more lenses. The lens may be a convex lens or a concave lens. Optionally, the projection system may further include a projection screen. In this case, a real image corresponding to the imaging light beam that emerges from the lens can be displayed on the projection screen.

Optionally, the projection system may further include a controller. The controller is connected to the projection optical core, and is configured to send a control signal to the projection optical core based on an image source. The control signal is used to control the projection optical core to modulate a light beam from the light source into an imaging light beam corresponding to the image source.

The controller may be one or more chips or one or more integrated circuits. For another example, the controller may be one or more optical digital signal processors (optical digital signal processors, oDSPs), one or more field-programmable gate arrays (field-programmable gate arrays, FPGAs), one or more application-specific integrated chips (application-specific integrated circuits, ASICs), one or more system on chips (system on chips, SoCs), one or more central processing units (central processing units, CPUs), one or more network processors (network processors, NPs), one or more microprocessors (microcontroller units, MCUs), one or more programmable processors (programmable logic devices, PLDs), one or more network adapter chips, one or more storage interface chips, or other integrated chips, or any combination of the foregoing chips or processors. Details are not described again.

The projection system is also referred to as a projector or a projection optical engine. An application scenario of the projection system is not limited in this application. For example, the projection system may be applied to a portable display device (for example, a projection mobile phone), a home theater, a commercial projection (for example, a light show or a concert), an outdoor projection, a conference presentation, a classroom presentation, a movie projection, an intelligent gesture interactive projection, a smart wall, a head-up display (head-up display, HUD), an augmented reality head-up display system (augmented reality head-up display, AR-HUD), AR glasses, virtual reality (virtual reality, VR) glasses, or the like.

FIG. 2-1 is an example diagram of a structure of a head-up display system according to this application. As shown in FIG. 2-1, the HUD system may include a projection system and an optical deflection module. The projection system may be any projection system described above. The projection system is configured to transmit an imaging light beam to the optical deflection module. The optical deflection module is configured to transmit the amplified imaging light beam to a windshield, and the imaging light beam forms a virtual image through the windshield. The HUD system projects vehicle-related information to a forward field of vision of a driver. The vehicle-related information may be instrument information (such as a vehicle speed), navigation information, or the like. In this case, the driver views the vehicle-related information within the forward field of vision, eliminating the need to look down at a dashboard or a central control display beneath a steering wheel. This shortens a braking response time in an emergency and improves driving safety. In this application, the HUD system being applied to a vehicle is used as an example. In another example, the HUD system may be further applied to a transportation tool that needs to be driven by a driver, for example, a ship, an airplane, or a helicopter.

This application further provides a transportation tool. The transportation tool may be a vehicle, a ship, an airplane, or the like. The transportation tool may include the HUD system and the windshield shown in FIG. 2-1. Certainly, the vehicle may further include other components such as a steering wheel, a processor, a memory, a wireless communication apparatus, and a sensor. This is not specifically limited in this application.

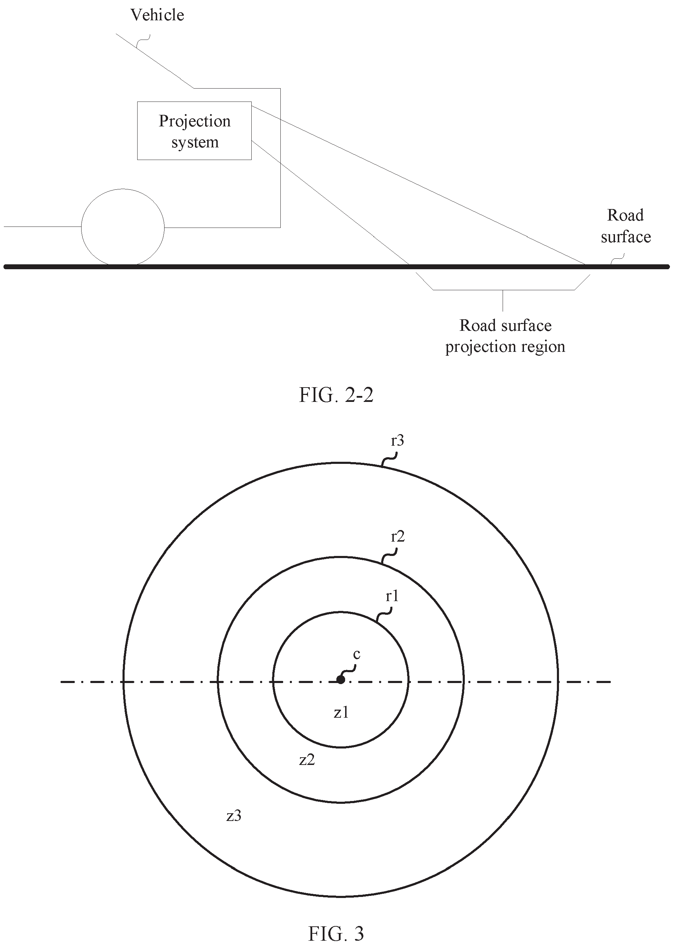

FIG. 2-2 is an example diagram of a structure of a projection vehicle light according to this application. The projection vehicle light includes a fixing base (not shown in FIG. 2-2) and a projection system. The fixing base can secure the projection system to a vehicle. FIG. 2-2 schematically shows a part of the vehicle. The projection system may be any projection system described above. An imaging light beam that emerges from the projection system can be imaged on a road surface on which the vehicle travels. Specifically, the imaging light beam displays a target light type in a road surface projection region of the road surface for imaging. The target light type formed by the imaging light beam may be a light blanket displayed in the road surface projection region. The light blanket notifies a driver of advanced driver-assistance system (advanced driver-assistance system, ADAS) information of the vehicle, main data (fuel consumption, an engine rotation speed, a temperature, and the like) on a vehicle dashboard, vehicle speed information, steering wheel angle information, vehicle body posture data, or the like by using a modulated image, color, light type, or the like. This is not specifically limited in this application. The imaging light beam that is emitted from the projection vehicle light shown in this application and that is displayed in the target light type may also be used to illuminate a road surface around the vehicle, or the like, to improve driving safety or navigation efficiency. The projection system can also be applied to an illumination device other than the vehicle light.

The projection vehicle light shown in this application is used to perform vehicle lighting and image projection, and may be a low beam or an adaptive high beam, to implement assisted autonomous driving of the vehicle. The vehicle may be an autonomous vehicle (autonomous vehicle, or self-piloting automobile), also referred to as an unmanned vehicle. The vehicle may alternatively be a car, a truck, a motorcycle, a bus, a lawn mower, a recreational vehicle, a playground vehicle, a trolley, a golf cart, a train, a handcart, or the like.

This application further provides smart glasses. The smart glasses shown in this application may be AR glasses or VR glasses. As a technology that cleverly integrates virtual information with the real world, the smart glasses extensively utilize a plurality of technical approaches such as multimedia, three-dimensional modeling, real-time tracking and registration, intelligent interaction, and sensing, simulate virtual information such as a text, an image, a three-dimensional model, music, or a video generated by a computer, and apply simulated information to the real world. The two types of information complement each other, to implement "augmentation" of the real world. As intelligent product types become more diverse, users find it increasingly convenient to use these products. The smart glasses include a frame, a lens, a projection optical core, and a light source. For descriptions of the light source and the projection optical core, refer to the foregoing related content. The lens, the projection optical core, and the light source are secured on the frame. The projection optical core modulates a light beam from the light source to obtain an imaging light beam. The projection optical core projects the imaging light beam to a lens facing an eye of a wearer, to reflect the imaging light beam to the eye of the wearer by using a reflection function of the lens.

The foregoing describes, with examples, an application scenario to which the light source provided in this application is applicable. The following describes a structure of the light source provided in this application.

Laser projection display technology can most authentically reproduce rich and vibrant colors of the objective world, delivering stunning effects. The light source provided in this application may be configured to emit a laser-fluorescence combined beam. However, due to high coherence of a laser beam, when laser light emitted by the light source is projected to a screen, interference between light beams can cause irregularly distributed bright and dark spots in a projected image, that is, laser speckles. The speckles severely affect imaging quality of the projected image, to be specific, reduce image resolution and contrast, and thus become a major obstacle to the development of laser projection display.

To reduce impact of speckle noise, a speckle-reduction device needs to be introduced into the light source. This increases a quantity of devices in the light source and increases a volume of the light source, which cannot meet a market requirement for miniaturization of a projector.

To reduce a quantity of devices in a light source, this application provides an optical device applied to the light source. The optical device may not only be configured to emit fluorescence under excitation of excitation laser light in the light source, but also suppress speckle effect of non-excitement laser light in the light source. This helps the light source emit a laser-fluorescence combined beam that suppresses the speckle, and also helps reduce the quantity of devices in the light source and reduce a volume of the projection light source, thereby meeting a market requirement for miniaturization of a projector.

The following describes a structure of the optical device.

The optical device includes an optical mechanism and a driving mechanism. The driving mechanism is configured to drive the optical mechanism to move. The optical mechanism is configured to be disposed in an optical path of laser light in a light source, and the optical mechanism includes a first region and a second region. The first region is configured to receive a first laser beam (that is, excitation laser) in the light source and emit a fluorescent beam under excitation of the first laser beam. The second region is configured to receive a second laser beam (that is, non-excitation laser) in the light source and reduce coherence of the second laser beam, to suppress speckle effect of the second laser beam. The fluorescent beam and the second laser beam may be combined and then emitted from the light source. This helps the light source emit a laser-fluorescence combined beam that suppresses the speckle, and also helps reduce a quantity of devices in the light source and reduce a volume of the projection light source, thereby meeting a market requirement for miniaturization of a projector.

In a movement process of the optical mechanism, the first laser beam may be incident at different positions in the first region. Correspondingly, a plurality of positions in the first region are used to receive the first laser beam in a time division manner and emit a fluorescent beam under excitation of the first laser beam. This helps avoid excessive heat production and low fluorescence emission efficiency caused by continuous receiving of the laser beam at a local position. To reduce a size of the first region, the first region may be a union of a plurality of incident positions of the first laser beam on the optical mechanism.

In the movement process of the optical mechanism, the second laser beam may be incident at different positions in the second region. Correspondingly, a plurality of positions in the second region are used to receive the second laser beam in a time-division manner and reduce coherence of the second laser beam. Because different positions have different impact on a phase of the laser beam, this arrangement helps increase spatial phase randomness of the second laser beam and enhance effect of reducing coherence of the second laser beam. To reduce a size of the second region, optionally, the second region may be a union of a plurality of incident positions of the second laser beam on the optical mechanism.

A track in which the driving mechanism drives the optical mechanism to move is not limited in this application.

For example, the driving mechanism may drive the optical mechanism to pivot, and the first region and the second region may be rectangular regions.

Alternatively, optionally, the driving mechanism is configured to drive the optical mechanism to rotate around an axis, and the first region and the second region are annular bodies that use the axis as a central axis. In this way, by adjusting a distance between an incident position of the laser beam on the optical mechanism and the axis, the laser beam can be incident to a specified region, thereby facilitating a design of an optical path. In this case, the optical mechanism may also be referred to as a composite fluorescent wheel. The following describes a possible structure of the optical mechanism with reference to the accompanying drawings.

FIG. 3 schematically shows a front view of an optical mechanism. FIG. 3 schematically shows three regions of the optical mechanism along a radius direction, which are respectively a circular region z1 with a radius of r1, an annular region z2 with an inner diameter of r1 and an outer diameter of r2, and an annular region z3 with an inner diameter of r2 and an outer diameter of r3. The three regions have a same center, which is point c shown in FIG. 3. As shown in FIG. 3, r1<r2<r3. The circular region may be a substrate, used for arrangement of a first region and a second region, and configured to be mounted together with a driving mechanism. The annular region z2 may be the first region described above, and the annular region z3 may be the second region described above. Alternatively, the annular region z2 may be the second region described above, and the annular region z3 may be the first region described above.

In FIG. 3, an example in which the annular region z2 is adjacent to the annular region z3, that is, both the inner diameter of the annular region z3 and the outer diameter of the annular region z2 are r2 is used. There may alternatively be an interval between the annular region z3 and the annular region z2, that is, the inner diameter of the annular region z3 may be greater than the outer diameter of the annular region z2.

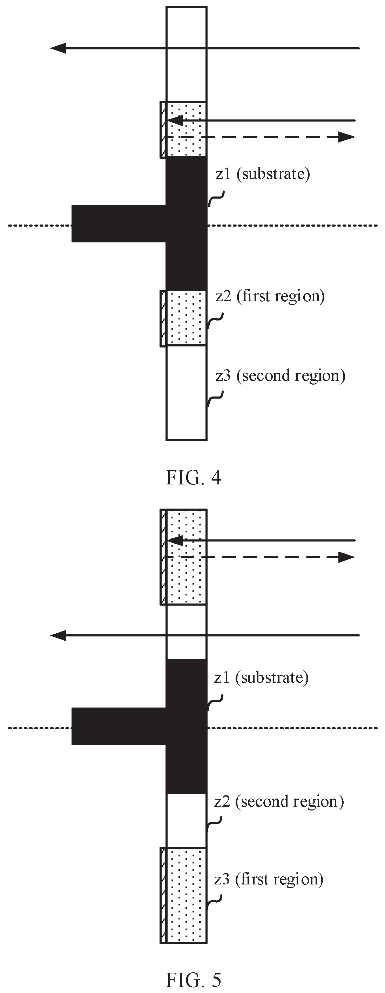

An example in which the annular region z2 is the first region described above, and the annular region z3 is the second region described above is used. FIG. 4 schematically shows a cross section of the optical mechanism shown in FIG. 3 along a dashed line.

As shown in FIG. 4, a region filled with black dots is a cross section of the annular region z2, and the annular region z2 sequentially includes a phosphor layer and a reflective layer along a thickness direction. A structure or a process of the phosphor layer is not limited in this application. For example, phosphor and an inorganic material may be mixed and cured to form the phosphor layer. The phosphor layer is configured to emit fluorescence under excitation of laser light. The reflective layer is configured to reflect the fluorescence. FIG. 4 further schematically shows an optical path of excitation laser light (represented by a black solid line with an arrow) incident to the annular region z2. As shown in FIG. 4, after the excitation laser light is incident to the phosphor layer in the annular region z2, the phosphor layer emits fluorescence (represented by a black dashed line with an arrow), and the reflective layer reflects the fluorescence.

The reflective layer may reflect the excitation laser light. In this case, an incident direction of the excitation laser light is opposite to an emergent direction of the fluorescence, or in other words, a surface to which the excitation laser light is incident is the same as a surface from which the fluorescence emerges, as shown in FIG. 4. Alternatively, the reflective layer may transmit the excitation laser light. In this case, an incident direction of the excitation laser light may be the same as an emergent direction of the fluorescence, or in other words, a surface to which the excitation laser light is incident is different from a surface from which the fluorescence emerges. The reflective layer is configured to increase light intensity of a fluorescent beam. The annular region z2 may not include the reflective layer.

As shown in FIG. 4, a region filled in white is a cross section of the annular region z3. The annular region z3 includes a diffusion layer. The diffusion layer is configured to diffuse the laser beam, to reduce or eliminate speckle effect in a laser-projected image. The diffusion layer may be made of a diffuser (diffuser) or a diffusion sheet. A surface of the diffusion layer may be coated with a diffuser, processed with a microstructure, or processed through sandblasting.

FIG. 4 further schematically shows an optical path of non-excitation laser light (represented by a black solid line with an arrow) incident to the annular region z3. As shown in FIG. 4, the non-excitation laser light is incident to the annular region z3, and emerges from the annular region z3. In addition, compared with the incident non-excitation laser light, the emergent non-excitation laser light has increased spatial phase randomness and reduced coherence, thereby helping reduce or even eliminate speckle effect of a projected image.

As shown in FIG. 4, a region filled in black is a cross section of the substrate. The substrate is configured to be mounted together with the driving mechanism, so as to rotate around an axis (a dashed line without an arrow shown in FIG. 4) under driving of the driving mechanism. FIG. 4 uses an example in which the cross section of the substrate is T-shaped. A specific shape of the cross section of the substrate is not limited in this application. Optionally, the substrate may be of a hollow-out structure, and a rotating shaft of the driving mechanism may penetrate the hollow-out structure.

A manner in which a structure part (for example, the phosphor layer) of the first region and a structure part (for example, the diffusion layer) of the second region are secured to the driving mechanism is not limited in this application.

For example, the substrate may have an opening or a hollow-out portion corresponding to the structure part, to embed the corresponding structure part, or the structure part may be pasted on the substrate.

Alternatively, for example, the phosphor layer may be used as the substrate, with a portion of the phosphor layer used as the first region, a portion (excluding phosphor) used to arrange the second region, and a portion used to mount the driving mechanism. Alternatively, optionally, the diffusion layer may be used as the substrate, with a portion of the diffusion layer used as the second region, a portion used to arrange the first region, and a portion used to mount the driving mechanism. This helps simplify a structure of the optical device.

An example in which the annular region z2 is the second region described above, and the annular region z3 is the first region described above is used. FIG. 5 schematically shows a cross section of the optical mechanism shown in FIG. 3 along a dashed line.

In FIG. 5, a region filled in black represents the substrate, a region filled in white represents the second region described above, and a region filled with black dots represents the first region described above. As shown in FIG. 5, a circular region z1 is the substrate, the annular region z2 is the second region, and the annular region z3 is the first region. A structure of the circular region z1 in FIG. 5 may be understood by referring to the structure of the circular region z1 in FIG. 4. A structure of the annular region z2 in FIG. 5 may be understood by referring to the structure of the annular region z3 in FIG. 4. A structure of the annular region z3 in FIG. 5 may be understood by referring to the structure of the annular region z2 in FIG. 4. Details are not described herein again.

The foregoing describes the structure of the optical device provided in this application. The following describes a light source built by using the optical device.

This application provides a light source. The light source includes a first laser, an optical splitting device, an optical device, and a first optical combining device. The first laser is configured to emit laser light. The optical splitting device is disposed in an optical path of the laser light, and is configured to split the laser light into a first laser beam and a second laser beam. The optical device includes an optical mechanism and a driving mechanism. The driving mechanism is configured to drive the optical mechanism to move. A first region of the optical mechanism is configured to receive the first laser beam and emit a fluorescent beam under excitation of the first laser beam. A second region of the optical mechanism is configured to receive the second laser beam and reduce coherence of the second laser beam. The first optical combining device is configured to receive the fluorescent beam and the second laser beam that emerges from the second region, and may combine the fluorescent beam and the second laser beam that emerges from the second region, so that the light source outputs a laser-fluorescence combined beam that suppresses a speckle.

By disposing the foregoing optical device in the light source, not only the fluorescent beam can be emitted to the first optical combining device, but also the second laser beam that helps suppress the speckle can emerge to the first optical combining device. This helps reduce a quantity of devices in the light source, and reduce a volume of a projection light source, thereby meeting a market requirement for miniaturization of a projector.

In addition, the first region and the second region are used to receive different laser beams in the light source. An incident position of the first laser beam on the optical mechanism and an incident position of the second laser beam on the optical mechanism may be different positions in space. This helps the first region receive the first laser beam and helps the second region receive the second laser beam. In this way, the optical mechanism simultaneously outputs the fluorescent beam and the second laser beam that suppress the speckle, helping the light source emit a laser-fluorescence combined beam with a stable wavelength. This optimizes display quality of a projected image.

The light source may include more devices. For example, to further improve a color gamut of an output light beam, optionally, the light source further includes a second laser, and the second laser is configured to emit a third laser beam. The optical mechanism is further located in an optical path of the third laser beam. In a movement process of the optical mechanism, the third laser beam may be incident at different positions of the optical mechanism. A region that is in the optical mechanism and that is used to receive the third laser beam is referred to as a third region, and the third region is used to reduce coherence of the third laser beam.

The first optical combining device is configured to combine the fluorescent beam, the second laser beam that emerges from the second region, and the third laser beam that emerges from the third region. Optionally, the second region and the third region are a same area on the optical mechanism. This helps reduce a size of the optical mechanism.

For example, the light source may further include one or more deflection devices, to change an optical path of a light beam.

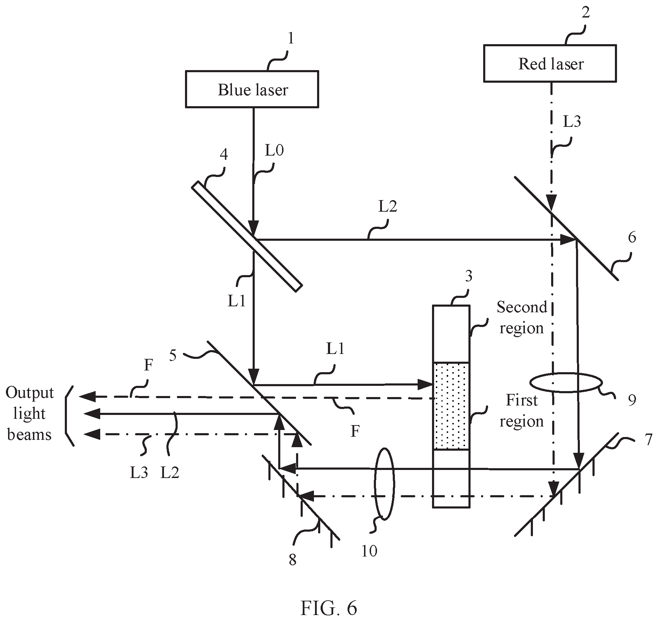

FIG. 6 schematically shows a possible structure of a light source. As shown in FIG. 6, the light source includes a blue laser 1, a red laser 2, an optical mechanism 3, an optical splitter 4, a dichroic sheet 5, a dichroic sheet 6, a reflector 7, a reflector 8, a convex lens 9, and a convex lens 10.

The blue laser 1 is configured to emit blue laser light L0. A wavelength range of the blue laser light may range from 440 nm to 470 nm.

The optical splitter 4 is configured to split the incident blue laser light L0. After the blue laser light L0 is incident to the optical splitter 4, a first blue laser beam L1 and a second blue laser beam L2 in the blue laser light L0 emerge in different directions. As shown in FIG. 6, after the blue laser light L0 is incident to the optical splitter 4, the optical splitter 4 transmits the first blue laser beam L1 and reflects the second blue laser beam L2.

The optical mechanism 3 may be an optical mechanism in the optical device described above. A shape and a structure of the optical mechanism 3 are not limited in this application. For example, the optical mechanism 3 may be as shown in FIG. 3 and FIG. 4. To simplify the drawing, in FIG. 6, a region filled in white represents a second region, and a region filled with black dots represents a first region.

The first blue laser beam L1 is incident to the dichroic sheet 5. The dichroic sheet 5 reflects the first blue laser beam L1 to the first region of the optical mechanism 3. The first region reflects a fluorescent beam F to the dichroic sheet 5 under excitation of the first blue laser beam L1. Then, the dichroic sheet 5 transmits the fluorescent beam F. A wavelength of fluorescence is generally a wide band ranging from 490 nm to 700 nm. For example, the fluorescent beam F may be a yellow fluorescent beam or a green fluorescent beam.

The second blue laser beam L2 is reflected to the dichroic sheet 5 via the dichroic sheet 6, the reflector 7, and the reflector 8 in sequence. The dichroic sheet 5 reflects the second blue laser beam L2.

The red laser 2 is configured to emit a red laser beam L3. A wavelength range of the red laser light may range from 630 nm to 660 nm. The red laser beam L3 is incident to the dichroic sheet 6. The dichroic sheet 6 transmits the red laser beam L3. The red laser beam L3 that is transmitted through the dichroic sheet 6 emerges to the dichroic sheet 5 after being reflected by the reflector 7 and the reflector in sequence. The dichroic sheet 5 reflects the red laser beam L3.

The fluorescent beam F, the second blue laser beam L2, and the red laser beam L3 that emerge from the dichroic sheet 5 are combined into an output light beam of the light source, and are emitted from the light source.

As shown in FIG. 6, the second region of the optical structure 3 is located in optical paths of the second blue laser beam L2 and the red laser beam L3 between the reflector 7 and the reflector 8, so that coherence between the second blue laser beam L2 and the red laser beam L3 can be reduced. This helps speckle effect of an output light beam.

To ensure that the laser beam is incident to the second region, a surface area of the second region generally needs to be set to be far greater than a spot area of the laser beam. Optionally, the light source further includes a first beam shaping device. The first beam shaping device is located in an optical path of the laser beam and before a diffusion component, and is configured to reduce a spot area of the laser beam, thereby helping reduce a surface area of the diffusion component and reduce a volume of the light source.

The laser beam that emerges from the first beam shaping device may be a collimated light beam or a converged light beam. Correspondingly, the first beam shaping device may be a collimating lens or a converging lens. For example, the first beam shaping device is a converging lens, and the diffusion component may be located at a focal point of the converging lens. As shown in FIG. 6, the first beam shaping device may be the convex lens 9. The convex lens 9 is disposed in the optical paths of the second blue laser beam L2 and the red laser beam L3 before the second region, so that a spot area of the second blue laser beam L2 and the red laser beam L3 incident to the second region can be reduced.

The second region generally increases a divergence angle of the laser beam while weakening coherence of the laser beam. Optionally, the light source further includes a second beam shaping device. The second beam shaping device is located in an optical path of the laser beam and after the second region. The second beam shaping device is configured to reduce a divergence angle of a combined laser beam, thereby helping reduce a size of a following-stage optical element. The second beam shaping device may be a collimating lens or a converging lens, for example, the convex lens 10 shown in FIG. 6. The convex lens 10 is disposed in the optical paths of the second blue laser beam L2 and the red laser beam L3 and after the second region, so that divergence angles of the second blue laser beam L2 and the red laser beam L3 can be reduced.

A relative position between devices in the light source is not limited in this application. The light source shown in FIG. 6 merely shows an example of a relative position between the devices. The light source provided in this application may further include more devices, for example, a collimating component, a light filtering component, and more reflectors.

The second blue laser beam L2 and the red laser beam L3 that emerge from the dichroic sheet 6 may be combined into a same light beam. To facilitate observation of optical paths of the light beams, the optical paths of the second blue laser beam L2 and the red laser beam L3 are drawn as different line segments with a distance in FIG. 6. Similarly, the fluorescent beam F reflected from the first region may be propagated to the dichroic sheet 5 along an optical path of the first blue laser beam L1. To facilitate observation of the optical paths of the light beams, the optical paths of the fluorescent beam F and the first blue laser beam L1 are drawn as different line segments with a distance in FIG. 6.

In FIG. 6, the blue laser 1 is used as an example of a first laser, and a wavelength of laser light emitted by the first laser is not limited in this application. Similarly, in FIG. 6, the red laser 2 is used as an example of a second laser, and a wavelength of laser light emitted by the second laser is not limited in this application. In FIG. 6, the blue laser light L0, the first blue laser beam L1, the second blue laser beam L2, the red laser beam L3, and the fluorescent beam F are respectively used as examples of laser light emitted by the first laser, a first laser beam, a second laser beam, a third laser beam, and a fluorescent beam described above. Specific optical paths of the light beams are not limited in this application. In FIG. 6, the optical splitter 4 is used as an example of an optical splitting device. A specific implementation of the optical splitting device is not limited in this application. Similarly, in FIG. 6, the dichroic sheet 5 is used as an example of a first optical combining device. A specific implementation of the first optical combining device is not limited in this application. For example, the first optical combining device may be configured to reflect a fluorescent beam and transmit the second laser beam and the third laser beam. In FIG. 6, the dichroic sheet 6 is used as an example of a second optical combining device. A specific implementation of the second optical combining device is not limited in this application. For example, the second optical combining device may be configured to reflect the third laser beam and transmit the second laser beam. FIG. 6 uses an example in which deflection devices (that is, the reflector 7 and the reflector 8) are disposed in an optical path of the second laser beam. Optionally, a deflection device may be disposed in an optical path of the first laser beam. Alternatively, deflection devices are disposed in both the optical path of the first laser beam and the optical path of the second laser beam. In FIG. 6, an example in which the deflection device is a reflector is used. A specific implementation of the deflection device is not limited in this application.

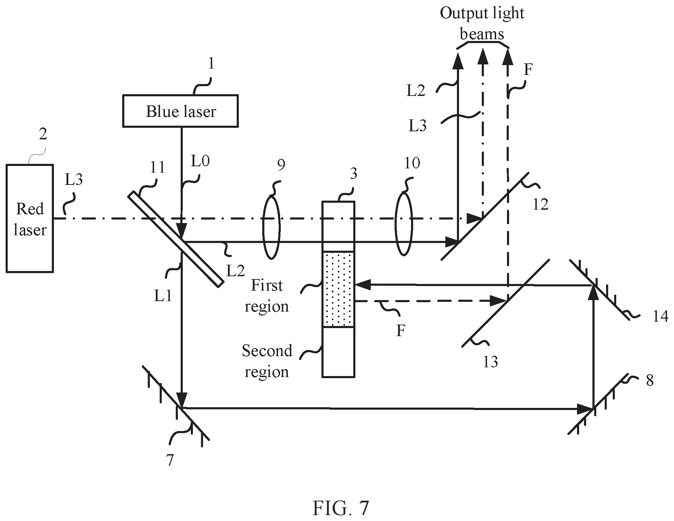

In FIG. 6, an example in which the second optical combining device and the optical splitting device are different devices is used. Optionally, as shown in FIG. 7, the second optical combining device may reuse the optical splitting device. This helps reduce a quantity of devices in the light source, and reduce a volume of the entire device, adapting to a trend towards device miniaturization, and reducing costs.

FIG. 7 schematically shows another possible structure of a light source. As shown in FIG. 7, the light source includes a blue laser 1, a red laser 2, an optical mechanism 3, an optical splitter 11, a dichroic sheet 12, a dichroic sheet 13, a reflector 7, a reflector 8, a reflector 14, a convex lens 9, and a convex lens 10.

The blue laser 1 is configured to emit blue laser light L0.

The optical splitter 11 is configured to split the incident blue laser light L0. After the blue laser light L0 is incident to the optical splitter 11, a first blue laser beam L1 and a second blue laser beam L2 in the blue laser light L0 emerge in different directions. As shown in FIG. 7, after the blue laser light L0 is incident to the optical splitter 11, the optical splitter 11 transmits the first blue laser beam L1 and reflects the second blue laser beam L2.

The optical mechanism 3 may be an optical mechanism in the optical device described above. A shape and a structure of the optical mechanism 3 are not limited in this application. For example, the optical mechanism 3 may be as shown in FIG. 3 and FIG. 4. To simplify the drawing, in FIG. 7, a region filled in white represents a second region, and a region filled with black dots represents a first region.

The first blue laser beam L1 is reflected to the dichroic sheet 13 via the reflector 7, the reflector 8, and the reflector 14 in sequence. The dichroic sheet 13 transmits the first blue laser beam L1 to the first region of the optical mechanism 3. The first region reflects a fluorescent beam F to the dichroic sheet 13 under excitation of the first blue laser beam L1. Then, the dichroic sheet 13 reflects the fluorescent beam F to the dichroic sheet 12, and the dichroic sheet 12 transmits the fluorescent beam F.

The second blue laser beam L2 is incident to the dichroic sheet 12 via the convex lens 9, the second region, and the convex lens 10 in sequence. The dichroic sheet 12 reflects the second blue laser beam L2.

The red laser 2 emits a red laser beam L3. A wavelength range of the red laser light may range from 630 nm to 660 nm. The red laser beam L3 is incident to the dichroic sheet 11, and the dichroic sheet 11 transmits the red laser beam L3. The red laser beam L3 that is transmitted through the dichroic sheet 11 is incident to the dichroic sheet 12 via the convex lens 9, the second region, and the convex lens 10 in sequence. The dichroic sheet 12 reflects the red laser beam L3. It can be learned that, in the light source shown in FIG. 7, the optical splitter 11 is used as both an optical splitting device and a second optical combining device.

For functions of the convex lens 9, the second region, and the convex lens 10 in an optical path, refer to the related descriptions in FIG. 6. Details are not described herein again.

The fluorescent beam F, the second blue laser beam L2, and the red laser beam L3 that emerge from the dichroic sheet 12 are combined into an output light beam of the light source, and are emitted from the light source.

A relative position between devices in the light source is not limited in this application. The light source shown in FIG. 6 merely shows an example of a relative position between the devices. The light source provided in this application may further include more devices, for example, a collimating component, a light filtering component, and more reflectors.

The second blue laser beam L2 and the red laser beam L3 that emerge from the optical splitter 11 may be combined into a same light beam. To facilitate observation of optical paths of the light beams, the optical paths of the second blue laser beam L2 and the red laser beam L3 are drawn as different line segments with a distance in FIG. 7. Similarly, the fluorescent beam F reflected from the first region may be propagated to the dichroic sheet 13 along an optical path of the first blue laser beam L1. To facilitate observation of the optical paths of the light beams, the optical paths of the fluorescent beam F and the first blue laser beam L1 are drawn as different line segments with a distance in FIG. 7.

In FIG. 7, the blue laser 1 is used as an example of a first laser, and a wavelength of laser light emitted by the first laser is not limited in this application. Similarly, in FIG. 7, the red laser 2 is used as an example of a second laser, and a wavelength of laser light emitted by the second laser is not limited in this application. In FIG. 7, the blue laser light L0, the first blue laser beam L1, the second blue laser beam L2, the red laser beam L3, and the fluorescent beam F are respectively used as examples of laser light emitted by the first laser, a first laser beam, a second laser beam, a third laser beam, and a fluorescent beam described above. Specific optical paths of the light beams are not limited in this application. In FIG. 7, the optical splitter 4 is used as an example of an optical splitting device. A specific implementation of the optical splitting device is not limited in this application. Similarly, in FIG. 7, the dichroic sheet 12 is used as an example of a first optical combining device. A specific implementation of the first optical combining device is not limited in this application.

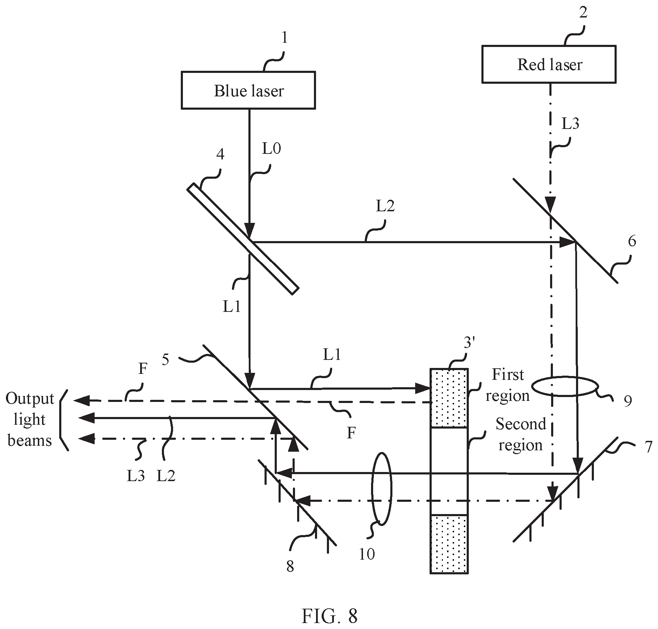

FIG. 8 schematically shows another possible structure of a light source. A difference between the light source shown in FIG. 8 and the light source shown in FIG. 6 lies only in that a relative position between a first region and a second region in an optical mechanism 3' shown in FIG. 8 is different from a relative position between a first region and a second region in the optical mechanism 3 shown in FIG. 6. Therefore, the light source shown in FIG. 8 may be understood by referring to the related content in FIG. 6. Details are not described herein again. A shape and a structure of the optical mechanism 3' are not limited in this application. For example, the optical mechanism 3' may be as shown in FIG. 3 and FIG. 5. To simplify the drawing, in FIG. 8, a region filled in white represents the second region, and a region filled with black dots represents the first region.

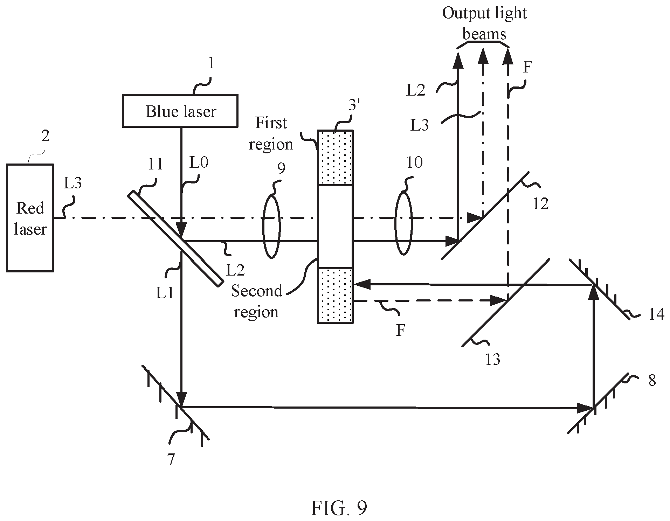

FIG. 9 schematically shows another possible structure of a light source. A difference between the light source shown in FIG. 9 and the light source shown in FIG. 7 lies only in that a relative position between a first region and a second region in an optical mechanism 3' shown in FIG. 9 is different from a relative position between a first region and a second region in the optical mechanism 3 shown in FIG. 7. Therefore, the light source shown in FIG. 9 may be understood by referring to the related content in FIG. 7. Details are not described herein again. A shape and a structure of the optical mechanism 3' are not limited in this application. For example, the optical mechanism 3' may be as shown in FIG. 3 and FIG. 5. To simplify the drawing, in FIG. 9, a region filled in white represents the second region, and a region filled with black dots represents the first region.

The foregoing uses an example in which both the second blue laser beam L2 and the red laser beam L3 pass through the second region. Because human eyes are more sensitive to a speckle formed by red laser light, optionally, an optical path of the red laser beam L3 may be set to pass through the second region, and an optical path of the second blue laser beam L2 may not pass through the second region.

An incident angle of a light beam in a light source on a surface of an optical device is not limited in this application. A specific angle may be determined based on a volume limitation of the light source or an entire projector.

Based on the structure and the optical path of the light source in this application that are described above, method steps performed by devices in the light source in a use process may be determined, and a time sequence between different steps may be determined based on positions of the different devices in the optical path. For a specific implementation of performing a corresponding method step by each component and effect of a method procedure, refer to the foregoing related descriptions. Details are not described again.

It should be noted that the terms "first", "second", "third", and the like in the specification, claims, and accompanying drawings of this application are used to distinguish similar objects, but do not limit a specific order or sequence. It should be understood that the foregoing terms are interchangeable in proper cases, so that embodiments described in this application can be implemented in a sequence other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A light source, wherein the light source comprises a first laser, an optical splitting device, an optical device, and a first optical combining device, wherein
the first laser is configured to emit laser light;
the optical splitting device is configured to split the laser light into a first laser beam and a second laser beam;
the optical device comprises an optical mechanism and a driving mechanism, the driving mechanism is configured to drive the optical mechanism to move, a first region of the optical mechanism is used to receive the first laser beam and emit a fluorescent beam under excitation of the first laser beam, and a second region of the optical mechanism is used to receive the second laser beam and reduce coherence of the second laser beam; and
the first optical combining device is configured to combine the fluorescent beam and the second laser beam that emerges from the second region.

2. The light source according to claim 1, wherein the driving mechanism is configured to drive the optical mechanism to rotate around an axis, and the first region and the second region are annular bodies that use the axis as a central axis.

3. The light source according to claim 2, wherein the first region surrounds the second region, or the second region surrounds the first region.

4. The light source according to any one of claims 1 to 3, wherein the first region comprises a phosphor layer, and the phosphor layer is configured to generate the fluorescent beam under excitation of the first laser beam.

5. The light source according to any one of claims 1 to 4, wherein the second region comprises a diffusion layer, and the diffusion layer is configured to diffuse the second laser beam.

6. The light source according to any one of claims 1 to 5, wherein the light source further comprises a first beam shaping device, and the first beam shaping device is located in an optical path of the second laser beam and before the second region; and
the first beam shaping device is configured to converge the second laser beam.

7. The light source according to any one of claims 1 to 6, wherein the light source further comprises a second beam shaping device, and the second beam shaping device is located in the optical path of the second laser beam and after the second region; and
the second beam shaping device is configured to collimate the second laser beam.

8. The light source according to any one of claims 1 to 7, wherein the light source further comprises a second laser;
the second laser is configured to emit a third laser beam;
the second region is further used to receive the third laser beam and reduce coherence of the third laser beam; and
the first optical combining device is further configured to receive the third laser beam that emerges from the second region, and combine the third laser beam, the fluorescent beam, and the second laser beam.

9. An optical device, wherein the optical device is applied to a light source, and the optical device comprises an optical mechanism and a driving mechanism;
the driving mechanism is configured to drive the optical mechanism to move; and
a first region of the optical mechanism is used to receive a first laser beam in the light source and emit a fluorescent beam under excitation of the first laser beam, and a second region of the optical mechanism is used to receive a second laser beam in the light source and reduce coherence of the second laser beam.

10. The optical device according to claim 9, wherein the driving mechanism is configured to drive the optical mechanism to rotate around an axis, and the first region and the second region are annular bodies that use the axis as a central axis.

11. The optical device according to claim 10, wherein the first region surrounds the second region, or the second region surrounds the first region.

12. The optical device according to any one of claims 9 to 11, wherein the first region comprises a phosphor layer, and the phosphor layer is configured to generate the fluorescent beam under excitation of the first laser beam.

13. The optical device according to any one of claims 10 to 12, wherein the second region comprises a diffusion layer, and the diffusion layer is configured to diffuse the second laser beam.

14. A method, wherein the method is applied to a light source, and the light source comprises a first laser, an optical splitting device, an optical device, and a first optical combining device, wherein the optical device comprises an optical mechanism and a driving mechanism, the driving mechanism is configured to drive the optical mechanism to move, and the method comprises:
emitting, by the first laser, laser light;
splitting, by the optical splitting device, the laser light into a first laser beam and a second laser beam;
receiving, by a first region of the optical mechanism, the first laser beam, and emitting a fluorescent beam under excitation of the first laser beam;
receiving, by a second region of the optical mechanism, the second laser beam, and reducing coherence of the second laser beam; and
combining, by the first optical combining device, the fluorescent beam and the second laser beam that emerges from the second region.

15. The method according to claim 14, wherein the light source further comprises a first beam shaping device, the first beam shaping device is located in an optical path of the second laser beam and before the second region, and the method further comprises:
converging, by the first beam shaping device, the second laser beam.

16. The method according to claim 14 or 15, wherein the light source further comprises a second beam shaping device, the second beam shaping device is located in the optical path of the second laser beam and after the second region, and the method further comprises:
collimating, by the second beam shaping device, the second laser beam.

17. The method according to any one of claims 14 to 16, wherein the light source further comprises a second laser, and the method further comprises:
emitting, by the second laser, a third laser beam;
receiving, by the second region, the third laser beam, and reducing coherence of the third laser beam; and
receiving, by the first optical combining device, the third laser beam that emerges from the second region, and combining the third laser beam, the fluorescent beam, and the second laser beam.

18. A projection system, wherein the projection system comprises a lens, a projection optical core, and the light source according to any one of claims 1 to 8, wherein
the light source is configured to emit a light beam;
the projection optical core is configured to modulate the light beam based on an image source, to obtain an imaging light beam; and
the lens is configured to perform projection and imaging on the imaging light beam.

19. A head-up display system, comprising an optical deflection module and the projection system according to claim 18, wherein
the projection system is configured to transmit an imaging light beam to the optical deflection module; and
the optical deflection module is configured to transmit the amplified imaging light beam to a windshield, and the amplified imaging light beam forms a virtual image through the windshield.

20. An illumination device, comprising a fixing base and the projection system according to claim 18, wherein the fixing base is configured to secure the projection system.

21. A vehicle, comprising a vehicle body, a windshield, a processor, and an optical system, wherein the optical system comprises the head-up display system according to claim 19 and/or comprises the illumination device according to claim 20, wherein
the vehicle body is configured to secure the windshield, the processor, and the optical system; and
the processor is configured to send an image source to the optical system.
